## Europäisches Patentamt

## European Patent Office

## Office européen des brevets

(11) Veröffentlichungsnummer : **0 087 556**
**B1**

(12)

# EUROPÄISCHE PATENTSCHRIFT

(45) Veröffentlichungstag der Patentschrift :
15.05.85

(51) Int. Cl.⁴ : **F 16 L 15/00, E 21 B 17/06**

(21) Anmeldenummer : **83100194.6**

(22) Anmeldetag : **12.01.83**

(54) **Rohrverbindung für Metallrohre.**

(30) Priorität : **27.02.82 DE 3207182**

(43) Veröffentlichungstag der Anmeldung :
**07.09.83 Patentblatt 83/36**

(45) Bekanntmachung des Hinweises auf die Patenterteilung : **15.05.85 Patentblatt 85/20**

(84) Benannte Vertragsstaaten :
**AT FR GB IT NL SE**

(56) Entgegenhaltungen :
**DE-A- 2 446 783**
**DE-B- 1 533 619**
**DE-C- 1 525 928**
**DE-U- 1 906 009**
**GB-A- 1 515 357**
**GB-A- 1 587 836**
**GB-A- 2 101 700**

(73) Patentinhaber : **MANNESMANN Aktiengesellschaft**
**Mannesmannufer 2**
**D-4000 Düsseldorf 1 (DE)**

(72) Erfinder : **Häring, Manfred**
**Eitelstrasse 3**
**D-4000 Düsseldorf 30 (DE)**

(74) Vertreter : **Andrejewski, Walter et al**
**Patentanwälte Andrejewski, Honke & Partner Postfach 10 02 54 Theaterplatz 3**
**D-4300 Essen 1 (DE)**

## Beschreibung

Die Erfindung bezieht sich gattungsgemäß auf eine Rohrverbindung für Metallrohre, insbesondere für Ölfeldrohre, — mit Bolzenrohrelement und Muffenrohrelement, die mit konischem Gewinde gegen eine Stoßfläche im Muffenrohrelement und eine Stirnfläche am Bolzenrohrelement verschraubbar sowie in radialer Richtung formschlüssig nach außen verspannbar sind, wobei das Bolzenrohrelement sowie das Muffenrohrelement in einem gewindefreien, an die Stirnfläche bzw. an die Stoßfläche anschließenden Bereich ein angeformtes Umfangsdichtungselement tragen. — Die Umfangsdichtungselemente bestehen bei solchen Rohrverbindungen beispielsweise aus einem Dichtungskegel im Muffenrohrelement und einem Dichtungskegel am Bolzenrohrelement oder aus einem Dichtungskegel im Muffenrohrelement und einem Dichtungsballen am Bolzenrohrelement oder aus einem Dichtungszylinder im Muffenrohrelement und wiederum einem Dichtungsballen am Bolzenrohrelement. Die Kegelwinkel sind beliebig. In einer Abwandlung können die beschriebenen Dichtflächen am Umfangsdichtungselement im Muffenrohrelement im Axialschnitt bogenförmig geführt sein, vorzugsweise zum Dichtungsballen hin konvex. Die Stoßfläche dient als Einschraubbegrenzung.

Rohrverbindungen des beschriebenen Aufbaus und der angegebenen Zweckbestimmung haben insbesondere im Ölfeld erhebliche Beanspruchungen aufzunehmen, wenn Rohrschüsse von 6 m Länge und mehr zu Rohrsträngen von einigen Kilometern Länge zusammengeschraubt in ein Bohrloch eingehängt werden, um dort unterschiedliche Funktionen zu erfüllen. Die Verschraubung, die über die konischen Gewinde erfolgt, ist dazu eine Kraftverschraubung mit vorgegebenem Verschraubungsdrehmoment. Die Umfangsdichtungselemente sind so eingerichtet, daß im verschraubten Zustand die für die Abdichtung Metall auf Metall erforderlichen Dichtkräfte wirken.

Bei der bekannten gattungsgemäßen Rohrverbindung (DE-B-15 33 619) ist die Stoßfläche im Muffenrohrelement eine glatte Fläche ohne Profilierungen. Sie verläuft nach außen flachkonisch zurückspringend und dient als Einschraubbegrenzung. Entsprechend ist die Stirnfläche am Bolzenrohrelement ausgebildet und angeordnet. Beim Verschrauben der Rohrelemente erfährt das Bolzenrohrelement an der flachkonisch zurückspringenden, einschraubbegrenzenden Stoßfläche eine Aufweitung nach außen, die die Dichtwirkung erhöht. Das Maß der Aufweitung hängt ab von der vorgegebenen Kraftverschraubung, ist aber insofern nicht definiert, als die Reibung zwischen der Stoßfläche und der Stirnfläche die Verhältnisse beeinflußt und die Reibung ihrerseits von einer Mehrzahl von unkontrollierbaren Faktoren, wie Oberflächenrauhigkeit, Oberflächenbeschädigungen, Schmiermittelfilm, abhängt. Das gilt auch für eine andere bekannte Ausführungsform (DE-C-15 25 928), bei der die Stoßfläche in zwei Stoßflächenbereiche aufgelöst ist. Der innere, vorwiegend der Einschraubbegrenzung dienende Stoßflächenbereich hat eine nach außen flachkonisch zurückspringende Form. Der anschließende äußere Stoßflächenbereich hat eine konisch nach außen vorspringende Form und dient vorwiegend der Abdichtung. An diesen äußeren Stoßflächenbereich schließt sich ein Freiraum an, weil der in Richtung zum Gewinde hin anschließende Abschnitt im Muffenrohrelement einen größeren Durchmesser als der gegenüberliegende Bereich des Bolzenrohrelementes aufweist. Die Abdichtung erfolgt durch Aufweitung des Bolzenrohrelementes beim Zusammenschrauben an dem nach außen flachkonisch zurückspringenden Stoßflächenbereich unter zumeist erheblicher plastischer Verformung der äußeren Kante an der Stirnfläche des Bolzenrohrelementes, wobei Material in den Freiraum gedrängt werden kann. Auch die Aufweitung durch die Wechselwirkung der Stirnfläche mit der nach außen flachkonisch zurückspringenden Stoßfläche bewirkt nicht oder nicht genau definierte innere Kräfte im Bereich der wechselwirkenden Flächen.

Der Erfindung liegt die Aufgabe zugrunde, bei einer gattungsgemäßen Rohrverbindung eine Einschraubbegrenzung zu schaffen, die gleichzeitig eine definierte Aufweitung des Rohrendes des Bolzenrohrelementes gegen die Umfangsdichtung bewirkt.

Zur Lösung dieser Aufgabe lehrt die Erfindung, daß die Stoßfläche im Muffenrohrelement senkrecht zur Rohrachse verläuft und zumindest ein Spiralprofil trägt, dessen geometrisches Zentrum die Rohrachse bildet, und daß die Stirnfläche mit einem entsprechenden Spiralprofil versehen ist, wobei die Lage der Spiralprofile auf das konische Gewinde derart abgestimmt ist, daß die Spiralprofile sich beim Zusammenschrauben der Rohrelemente ineinandergreifend verspannen.

Im allgemeinen wird man die Spiralprofile mehrgängig ineinanderschachteln. Es versteht sich von selbst, daß die Spiralprofile aus Spiralrippen und Spiralnuten bestehen. — Rohrverbindungen aus Bolzenrohrelement und Muffenrohrelement, bei denen die Stoßfläche im Muffenrohrelement senkrecht zur Rohrachse verläuft, sind an sich bekannt, und zwar insbesondere bei einem Vorläufer der gattungsgemäßen Ausführungsform (DE-U-19 06 009), wo das Rohrende des Bolzenrohrelementes mit einem Dichtungsballen in einen Dichtungskegel des Muffenrohrelementes eingeführt wird und dadurch eine Kontraktion erfährt, ohne daß aufspreizende Kräfte mit der beschriebenen Verspannung auftreten.

Die Erfindung geht von der Erkenntnis aus, daß mit Hilfe von Formschlußausbildungen, die als Spiralprofile beim Zusammenschrauben der Rohrverbindung gleichsam gewindeartig ineinanderfassen, definierte innere Kräfte erzeugt werden können, deren Größe hinreichend eindeutig und definiert vom Verschraubungsdrehmoment abhängt.

Die Geometrie der Spiralprofile ist im Rahmen der Erfindung weitgehend beliebig. Nach bevorzugter Ausführungsform der Erfindung ist die Anordnung so gretroffen, daß die Spiralrippe ein im Radialschnitt trapezförmiges, zu ihrer Kopffläche hin sich verjüngendes Querschnittprofil aufweist, und daß die Spiralnut, bis auf ein für die Verschraubung notwendiges Spiel, komplementär ausgebildet ist. Insbesondere empfiehlt es sich, die Geometrie so zu verwirklichen, daß die Spiralrippe der Stoßfläche des Muffenrohrelementes auf ihrer von der Rohrachse wegweisenden Außenseite eine zur Rohrachse parallele Außenflanke aufweist, der eine entsprechende Innenflanke in der Spiralnut der Stirnfläche zugeordnet ist und daß die Spiralrippe und die Spiralnut im zusammengeschraubten Zustand mit ihren zur Rohrachse parallelen Flanken gegeneinandergepreßt sind. Die Spiralrippe und die Spiralnut wirken zugleich als Zentrierelemente, so daß die Stoßfläche sowie die Stirnfläche durch diese Zentrierelemente zentrierbar sind. Ein im nicht zusammengeschraubten Zustand im Bereich der Stirnfläche vom Innendurchmesser des Muffenrohrelementes aus Toleranzgründen unterschiedlicher Innendurchmesser des Bolzenrohrelementes korrigiert sich beim Verspannen.

Die erreichten Vorteile sind darin zu sehen, daß bei der erfindungsgemäßen Rohrverbindung bei der Kraftverschraubung mit vorgegebenem Verschraubungsdrehmoment zunächst in der Stoßfläche und der damit wechselwirkenden Stirnfläche, dann aber auch an den Umfangsdichtungselementen definierte innere Kräfte entstehen, weil die Einschraubbegrenzung wegen der ineinanderfassenden Spiralprofile eine definierte Aufweitung des Rohrendes des Bolzenrohrelementes bewirkt. Die Funktionssicherheit einer erfindungsgemäßen Rohrverbindung wird dadurch gegenüber den bekannten Ausführungsformen beachtlich verbessert. Das alles gilt insbesondere für Ölfeldrohre, und hauptsächlich auch für solche, bei denen die radiale Breite der Stoßfläche bzw. der Stirnfläche bei 5 mm liegt und die Spiralprofilierungen entsprechend kleiner sind.

Im folgenden wird die Erfindung anhand einer lediglich ein Ausführungsbeispiel darstellenden Zeichnung ausführlicher erläutert. Es zeigen in schematischer Darstellung

Figur 1 einen Axialschnitt durch eine erfindungsgemäße Rohrverbindung im zusammengeschraubten Zustand,

Figur 2 den vergrößerten Ausschnitt A aus dem Gegenstand nach Fig. 1 und

Figur 3 den Gegenstand nach Fig. 2 vor dem endgültigen Zusammenschrauben und vor dem Verspannen der Spiralprofile gegeneinander.

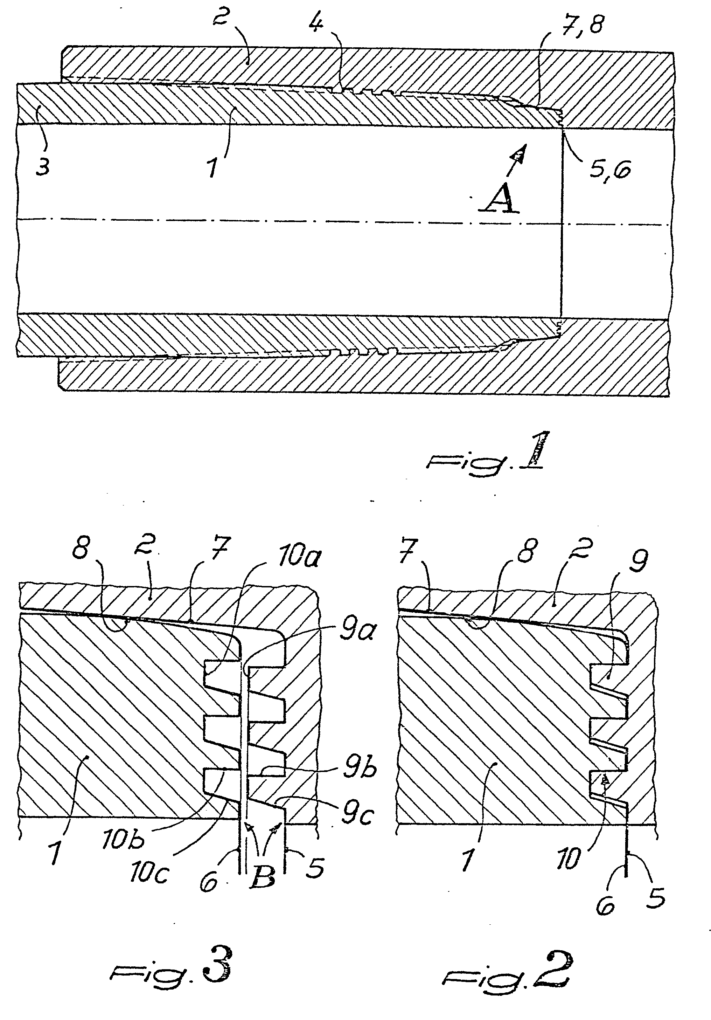

Die in den Figuren dargestellte Rohrverbindung ist für Metallrohre, insbesondere für Ölfeldrohre, bestimmt. Zur Rohrverbindung gehört ein Bolzenrohrelement 1 und ein Muffenrohrelement 2. In der Fig. 1 mag sich der zugeordnete Rohrschuß 3 nach links fortsetzen, um am äußeren Ende ein Muffenrohrelement 2 zu tragen, wie es in der Fig. 1 rechts dargestellt ist. Das Muffenrohrelement 2 kann aber auch ein separates Bauteil, das Bolzenrohrelement 1 vorgeschweißt sein. Sie sind jedenfalls mit konischem Gewinde 4 gegen eine Stoßfläche 5 im Muffenrohrelement 2 und eine Stirnfläche 6 am Bolzenrohrelement 1 verschraubbar. Das Bolzenrohrelement 1 sowie das Muffenrohrelement 2 tragen in einem gewindefreien, an die Stirnfläche bzw. an die Stoßfläche anschließenden Abschnitt ein angeformtes Umfangsdichtungselement 7 bzw. 8. Die Stoßfläche 5 und die Stirnfläche 6 verlaufen orthogonal, d. h. senkrecht, zur Rohrachse.

Die Stoßfläche 5 im Muffenrohrelement 2 trägt ein umlaufendes Spiralprofil 9. Die Stirnfläche 6 am Bolzenrohrelement 1 ist mit einem entsprechenden Spiralprofil 10 versehen. Die Anordnung ist so getroffen, daß das Spiralprofil 10 und das Spiralprofil 9 beim Zusammenschrauben von Bolzenrohrelement 1 und Muffenrohrelement 2 mit dem vorgegebenen Verschraubungsdrehmoment ineinanderfassen, wobei in radialer Richtung eine formschlüssige Verspannung nach außen eintritt. Im Ausführungsbeispiel besitzt das Spiralprofil 9 drei Umläufe, gewindetechnisch ausgedrückt drei Spiralgewindegänge. Entsprechend bildet das Spiralprofil 10 drei Umläufe. Es könnte sich aber auch um eine Ausführungsform handeln, bei der Stoßflächenspiralprofile 9 und Stirnflächenspiralprofile 10 gleichsam mehrgängig ineinandergeschachtelt sind. Beim Zusammenschrauben entstehen Kräfte, die das Bolzenrohrelement 1 aufspreizen und deren Größe durch die Spiralprofilierungen 9, 10 genau vorgebbar ist.

Das Spiralprofil an der Stoßfläche 5 ist als Spiralrippe 9, das Spiralprofil an der Stirnfläche 6 ist als Spiralnut 10 ausgeführt, wobei die Spiralrippe 9 eine Kopffläche 9a, die Spiralnut 10 eine Nutengrundfläche 10a aufweisen, die im Ausführungsbeispiel im zusammengeschraubten Zustand gegeneinandergepreßt sind. Aus einer vergleichenden Betrachtung der Fig. 2 und 3 entnimmt man ohne weiteres, wie die Inversion aussieht, bei der das Spiralprofil 9 als Spiralnut, das Spiralprofil 10 als Spiralrippe ausgeführt wären. Die Spiralrippe 9 besitzt ein im Radialschnitt trapezförmiges, zu der Spiralnut 10 hin sich verjüngendes Querschnittprofil. Die Spiralnut 10 ist, bis auf ein für die Verschraubung notwendiges Spiel, komplementär ausgebildet. In der dargestellten Ausführungsform mit Spiralrippe 9 an der Stoßfläche 6 besitzt die Spiralrippe 9 auf ihrer von der Rohrachse wegweisenden Außenseite eine zur Rohrachse parallele Außenflanke 9b, der eine entsprechende Innenflanke 10b an der Spiralnut 10 der Stirnfläche 6

5　　　　　　　　　0 087 556　　　　　　　　6

zugeordnet ist. Man erkennt, daß die Spiralrippe 9 und die Spiralnut 10 im zusammengeschraubten Zustand mit ihren zur Rohrachse parallelen Flanken 9b, 10b gegeneinandergepreßt sind. Die Spiralrippe 9 und die Spiralnut 10 dienen zugleich als Zentrierelemente. In der Fig. 3 erkennt man bei dem Pfeil B, daß das Bolzenrohrelement 1 im nicht zusammengeschraubten Zustand im Bereich seiner Stirnfläche 6 einen vom Innendurchmesser des Muffenrohrelementes 2 unterschiedlichen Innendurchmesser aufweist. Nichtsdestoweniger gehen gemäß Fig. 2 die Stirnfläche 6 und die Stoßfläche 5 im zusammengeschraubten Zustand infolge der radialen Verspannung stufenfrei ineinander über. Im Ausführungsbeispiel sind die Umfangsdichtungselemente in Form eines Dichtungskegels 7 im Muffenrohrelement 2 und in Form eines Dichtungsballens 8 am Bolzenrohrelement 1 ausgeführt.

## Patentansprüche

1. Rohrverbindung für Metallrohre, insbesondere für Ölfeldrohre, — mit Bolzenrohrelement (1) und Muffenrohrelement (2), die mit konischem Gewinde (4) gegen eine Stoßfläche (5) im Muffenrohrelement (2) und eine Stirnfläche (6) am Bolzenrohrelement (1) verschraubbar sowie in radialer Richtung formschlüssig nach außen verspannbar sind, wobei das Bolzenrohrelement (1) sowie das Muffenrohrelement (2) in einem gewindefreien, an die Stirnfläche (6) bzw. an die Stoßfläche (5) anschließenden Bereich ein angeformtes Umfangsdichtungselement (7, 8) tragen, dadurch gekennzeichnet, daß die Stoßfläche (5) im Muffenrohrelement (2) senkrecht zur Rohrachse verläuft und zumindest ein Spiralprofil (9) trägt, dessen geometrisches Zentrum die Rohrachse bildet, und daß die Stirnfläche (6) am Bolzenrohrelement (1) mit einem entsprechenden Spiralprofil (10) versehen ist, wobei die Lage der Spiralprofile (9, 10) auf das konische Gewinde (4) derart abgestimmt ist, daß die Spiralprofile (9, 10) sich beim Zusammenschrauben der Rohrelemente (1, 2) ineinandergreifend verspannen.

2. Rohrverbindung nach Anspruch 1, dadurch gekennzeichnet, daß die Spiralprofile (9, 10) mehrgängig ineinandergeschachtelt sind.

3. Rohrverbindung nach einem der Ansprüche 1 oder 2, dadurch gekennzeichnet, daß die Spiralrippe (9) ein im Radialschnitt trapezförmiges, zu ihrer Kopffläche (9a) hin sich verjüngendes Querschnittsprofil aufweist und die Spiralnut (10), bis auf ein für die Verschraubung notwendiges Spiel, komplementär ausgebildet ist.

4. Rohrverbindung nach Anspruch 3, dadurch gekennzeichnet, daß die Spiralrippe (9) der Stoßfläche (5) des Muffenrohrelementes (2) auf ihrer von der Rohrachse wegweisenden Außenseite eine zur Rohrachse parallele Außenflanke (9b) aufweist, der eine entsprechende Innenflanke (10b) in der Spiralnut (10) der Stirnfläche (6) zugeordnet ist und daß die zur Rohrachse parallelen Flanken (9b, 10b) im zusammengeschraubten Zustand gegeneinandergepreßt sind.

## Claims

1. A tube connection for metallic tubes, particularly for oilfield tubes — with an externally-threaded tube unit and a socket tube unit that by means of conical threads can be screwed together against an abutment surface of the socket tube unit and a frontal surface of the externally-threaded tube unit and can be stressed outwardly in a radial direction by locking action in which the externally-threaded tube unit and the socket tube unit carry a circumferential sealing unit formed on to an area free from threads that is adjacent to the frontal surface and the abutment surface, characterized in that the abutment surface (5) of the socket tube unit (2) runs transversely to the axis of the tube and carries at least one spiral profile (9) the geometric centre of which is the axis of the tube, and that the frontal surface (6) is provided with a corresponding spiral profile (10), the positions of the spiral profiles (9, 10) being so related to the conical threads (4) that the spiral profiles (9, 10) grip into one another and are stressed as the tubular units (1, 2) are screwed together.

2. A tube connection according to Claim 1, characterized in that multiple spiral profiles (9, 10) are interlocked into one another.

3. A tube connection according to one of Claims 1 or 2, characterized in that the spiral rib (9) possesses a sectional profile of trapezium shape in radial section, tapering towards its head surface (9a), and the spiral groove (10) is complementarily shaped, apart from the play that is necessary for them to be screwed together.

4. A tube connection according to Claim 3, characterized in that the spiral rib (9) of the abutment surface (5) of the socket tube unit has, on its outer side facing away from the axis of the tube an outer flank (9b) parallel to the axis of the tube with which a corresponding inner flank of the spiral groove (10) of the frontal surface (6) is associated — or vice versa — and that the flanks (9b, 10b) parallel to the axis of the tube are pressed against one another in the screwed-together condition.

## Revendications

1. Raccord à tubes pour des tubes métalliques, en particulier des tubes de champs pétrolifères, comprenant un élément boulon du tuyau et un élément manchon du tuyau qui peuvent être vissés avec un filetage conique contre une surface d'about dans l'élément manchon du tuyau et une face frontale sur l'élément boulon du tuyau et qui peuvent être bloqués mécaniquement dans le sens radial vers l'extérieur, l'élément boulon du tuyau et l'élément manchon du tuyau comportant, dans une section non filetée faisant suite à la face frontale ou à la surface d'about, un élément d'étanchéité circonférentiel, caractérisé par le fait que la surface d'about (5) dans l'élément manchon du tuyau (2) s'étend perpendiculairement à l'axe du tuyau et qu'elle porte au moins un profil en spirale (9) dont le centre géométrique constitue l'axe du tuyau, et que la face frontale (6) est munie d'un profil en spirale (10) analogue, la position des profils en spirale (9, 10) étant accordée au filetage conique (4) de telle façon que les profils en spirale (9, 10) se bloquent en s'engrenant lors du vissage des éléments de tuyau (1, 2).

2. Raccord à tubes selon la revendication 1, caractérisé par le fait que les profils en spirale (9, 10) sont emboîtés à plusieurs pas.

3. Raccord à tubes selon l'une des revendications 1 ou 2, caractérisé par le fait que la nervure en spirale (9) présente, en coupe radiale, un profil de section trapézoïdal se rétrécissant en direction de son sommet (9a) et que la rainure en spirale (10) présente une conformation complémentaire à l'exception d'un jeu nécessaire pour le vissage.

4. Raccord à tubes selon la revendication 3, caractérisé par le fait que la nervure en spirale (9) de la surface d'about (5) de l'élément manchon du tuyau (2) présente, à sa face extérieure opposée à l'axe du tuyau, un flanc extérieur (9b) parallèle à l'axe du tuyau auquel est associé un flanc intérieur correspondant (10b) dans la rainure en spirale (10) — ou inversement —, et que, à l'état vissé, les flancs (9b, 10b) parallèles à l'axe du tuyau sont pressés les uns contre les autres.

Fig. 1

Fig. 3

Fig. 2